# EUROPÄISCHE PATENTSCHRIFT

(11) **EP 2 576 283 B1**
(45) Veröffentlichungstag und Bekanntmachung des Hinweises auf die Patenterteilung: **16.04.2014**
(21) Anmeldenummer: 11720040.2
(22) Anmeldetag: 17.05.2011
(51) Int. Cl.: B60N 2/225

(54) **BESCHLAG FÜR EINEN FAHRZEUGSITZ**
FITTING FOR A VEHICLE SEAT
FERRURE POUR SIÈGE DE VÉHICULE

(30) Priorität: 31.05.2010 DE 102010022615
(43) Veröffentlichungstag der Anmeldung: 10.04.2013
(73) Patentinhaber: Keiper GmbH & Co. KG, 67657 Kaiserslautern (DE)
(72) Erfinder: STILLEKE, Martin, 45657 Recklinghausen (DE); BLASS, Eric, 42855 Remscheid (DE); ROCK, Arkadius, 42719 Solingen (DE)
(74) Vertreter: Liedhegener, Ralf
(86) Internationale Anmeldenummer: PCT/EP2011/002420
(87) Internationale Veröffentlichungsnummer: WO 2011/151017

(56) Entgegenhaltungen:
- EP-A2- 2 475 544
- WO-A2-2011/029521
- DE-A1- 19 938 666
- DE-A1-102008 028 101

## Beschreibung

Die Erfindung betrifft einen Beschlag für einen Fahrzeugsitz mit den Merkmalen des Oberbegriffs des Anspruches 1.

Ein Beschlag dieser Art ist aus der DE 195 48 809 C1 oder der DE 199 38 666 A1 bekannt. Das erste Beschlagteil weist einen Zahnkranz auf und stützt einen Exzenter mittels eines Kragens ab, in welchem ein Mitnehmer gelagert ist. Das zweite Beschlagteil weist ein Zahnrad auf und nimmt den Exzenter auf. Der Mitnehmer schließt mit einer Abdeckscheibe ab, an welcher ein Dichtring befestigt ist. Dieser Dichtring liegt an dem zweiten Beschlagteil an, so dass an dieser Stelle der Bauraum zwischen erstem Beschlagteil und zweitem Beschlagteil abgedichtet ist.

In der DE 10 2008 028 101 A1 ist eine Dichtung für einen Axialspalt beschrieben, welcher für Schmutzpartikel oder Lack einen Zugang zum Bauraum zwischen erstem Beschlagteil und zweitem Beschlagteil bilden würde. Diese Dichtung trennt den Bauraum jedoch nicht in einen radial äußeren Bauraum, welcher zu dem durch Zahnrad und Zahnkranz definierten Getriebe hin gelegen ist und einen radial inneren Bauraum, welcher zum Exzenter hin gelegen ist. Es kann somit nicht verhindert werden, dass während des Betriebs des Beschlags aufgrund der exzentrischen Relativbewegungen Fett für die Schmierung des Exzenters zum Getriebe hin wegläuft.

Der Erfindung liegt die Aufgabe zu Grunde, einen alternativen Beschlag zum Beschlag der eingangs genannten Art zu schaffen. Diese Aufgabe wird erfindungsgemäß durch einen Beschlag mit den Merkmalen des Anspruches 1 gelöst. Vorteilhafte Ausgestaltungen sind Gegenstand der Unteransprüche.

Der Trennring unterteilt den abgedichteten Bauraum, so dass der Exzenter von dem durch Zahnrad und Zahnkranz definierten Getriebe getrennt ist. Dies bietet einen weiteren Schutz des Exzenters, insbesondere wenn der Trennring dicht am ersten Beschlagteil und am zweiten Beschlagteil anliegt. Der Trennring ist hierfür zugsweise flexibel, insbesondere elastisch, ausgebildet, beispielsweise aus Kunststoff. Im Getriebe kann Fett vorgesehen sein, welches die Laufeigenschaften des Getriebes verbessert und zugleich den Bauraum abdichtet. Soweit auch Fett für die Verbesserung der Laufeigenschaften des Exzenters vorgesehen ist, so wird dieses Fett mittels des Trennrings im inneren Bauraum gehalten, also am Exzenter. So wird verhindert, dass der Exzenter durch seinen Umlauf das Fett allmählich verdrängt. Zudem ist eine geringere Menge Fett notwendig.

Die Verwendung eines Exzenterumlaufgetriebes zwischen dem ersten Beschlagteil und dem zweiten Beschlagteil erlaubt eine stufenlose Neigungseinstellung der Lehne. Die Einsparung eines zentralen Ritzels gegenüber einem Planetenumlaufgetriebe führt zur Entstehung einer Taumelbewegung, die der relativen Drehung der Beschlagteile überlagert ist. Das Exzenterumlaufgetriebe kann manuell oder motorisch angetrieben werden.

Der Grundanteil zum Sperren des Exzenterumlaufgetriebes wird durch die Reibung zwischen dem Exzenter und einem der beiden Beschlagteile aufgebracht, vorzugsweise dem zweiten Beschlagteil, welches vorzugsweise einen Kragen zum Abstützen des Exzenters aufweist. Die Keilsegmente, welche den Exzenter definieren, dienen sowohl dem Sperren als auch dem Antreiben der Abwälzbewegung von Zahnrad und Zahnkranz. Ein vorzugsweise zusätzlich vorgesehenes Sperrelement dient dem Sperren des Beschlags unter dynamischen Belastungen.

Die Ausbildung des Zahnkranzes an dem den Exzenter aufnehmenden ersten Beschlagteil und die Ausbildung des Zahnrades an dem den Exzenter abstützenden zweiten Beschlagteil spart Material und Bauraum, indem das Zahnrad am radial äuβeren Rand des zweiten Beschlagteils ausgebildet werden kann (welches dann der am ersten Beschlagteil befestigte Umklammerungsring übergreift) und trotzdem ausreichend große Verbindungsbereiche am zweiten Beschlagteil zur Montage des Beschlags zur Verfügung stehen.

Die Erfindung ist vorzugsweise zur Neigungseinstellung der Lehne von Fahrzeugsitzen in Kraftfahrzeugen einsetzbar, kann aber auch für andere Einsatzzwecke verwendet werden.

Im folgenden ist die Erfindung anhand eines in der Zeichnung dargestellten Ausführungsbeispiels mit einer Abwandlung näher erläutert. Es zeigen
- Fig. 1: einen axialen Schnitt durch den Beschlag,
- Fig. 2: eine schematische Darstellung eines Fahrzeugsitzes,

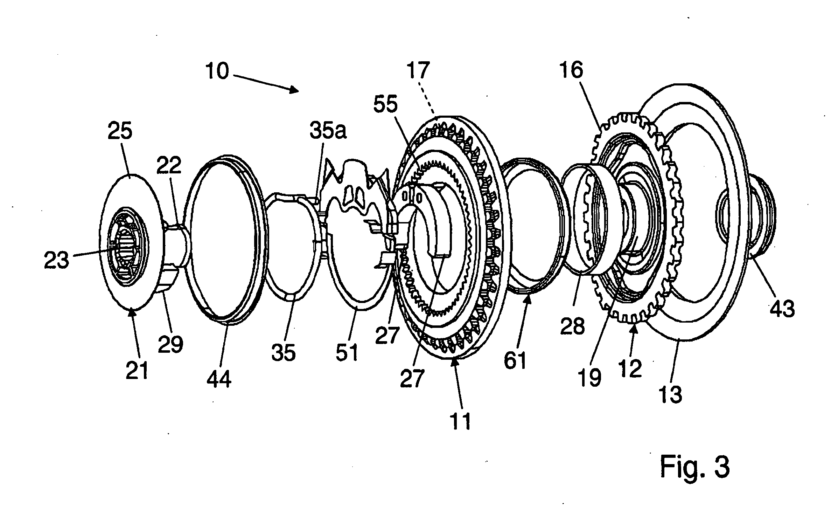

- Fig. 3: eine Explosionsdarstellung des Beschlags,
- Fig. 4: eine Ansicht eines Trennrings,
- Fig. 5: einen Schnitt entlang der Linie V-V in Fig. 4,
- Fig. 6: eine Vergrößerung des Bereichs VI in Fig. 5,
- Fig. 7: eine Ansicht eines Trennrings in abgewandelter Ausführung,
- Fig. 8: einen Schnitt entlang der Linie VIII-VIII in Fig. 7, und
- Fig. 9: eine Vergrößerung des Bereichs IX in Fig. 8.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 drehfest in jeweils einen Beschlag 10 ein. Die Antriebswelle 7 definiert die verwendeten Richtungsangaben eines Zylinderkoordinatensystems.

Der Beschlag 10 weist ein erstes Beschlagteil 11 und ein zweites Beschlagteil 12 auf, welche relativ zueinander verdrehbar sind. Die beiden Beschlagteile 11 und 12 lassen sich jeweils näherungsweise in eine kreisrunde Scheibenform einbeschreiben. Zur Aufnahme der axial wirkenden Kräfte, also zum Zusammenhalt der Beschlagteile 11 und 12, ist ein Umklammerungsring 13 vorgesehen. Ein solcher Zusammenhalt mittels eines Umklammerungsrings ist beispielsweise in der US 6,799,806 B2 beschrieben. Der vorzugsweise metallische Umklammerungsring 13 ist fest mit einem der beiden Beschlagteile 11 und 12 verbunden, vorliegend dem ersten Beschlagteil 11 in einem äußeren Randabschnitt, beispielsweise verschweißt oder (in Umfangsrichtung wenigstens teilweise) umgebördelt. Mittels eines radial nach innen weisenden Randes übergreift der Umklammerungsring 13, gegebenenfalls unter Zwischenlage eines separaten Gleitrings, das relativ zu ihm bewegliche, andere der beiden Beschlagteile 11 und 12 radial außen (d.h. in dessen radial äußerem Randbereich), ohne die Relativdrehung der beiden Beschlagteile 11 und 12 zu behindern, d.h. der Umklammerungsring 13 (welcher eine im wesentlichen flache Form aufweisen kann) und das mit ihm fest verbundene Beschlagteil 11 oder 12 umklammern das relativ zu ihnen bewegliche, andere der beiden Beschlagteile 11 und 12. In baulicher Hinsicht bilden die beiden Beschlagteile 11 und 12. daher zusammen (mit dem Umklammerungsring 13) eine scheibenförmige Einheit.

Mit der Montage des Beschlags 10 ist das erste Beschlagteil 11 beispielsweise fest mit der Struktur der Lehne 4 verbunden, also lehnenteilfest. Das zweite Beschlagteil 12 ist dann fest mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt also im Kraftfluss zwischen Lehne 4 und Sitzteil 3, weshalb die beide Beschlagteile 11 und 12 aus Metall bestehen, vorzugsweise aus Stahl.

Der Beschlag 10 ist als Getriebebeschlag ausgebildet, bei welchem das erste Beschlagteil 11 und das zweite Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 101 A1 beschrieben ist.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16. Die Ausbildung von Zahnrad 16 und Zahnkranz 17 erfolgt vorzugsweise mittels eines einzigen Präge-Stanz-Vorgangs, der zugleich die Beschlagteile 11 und 12 aus ihrem Ausgangsmaterial ausstanzt. Alternativ können die Beschlagteile 11 und 12 - mit ähnlichen Geometrien und gleichen Funktionen - durch Massivumformung (vorzugsweise Kaltfließpressen oder Warmfließpressen) hergestellt werden. Vorliegend bildet das Zahnrad 16 den radial äußeren Rand des zweiten Beschlagteils 12, d.h. das zweite Beschlagteil 12 schließt radial außen mit dem Zahnrad 16 ab.

Eines der beiden Beschlagteile 11 und 12 weist einen Kragen 19 auf, vorliegend das zweite Beschlagteil 12 konzentrisch zum Zahnrad 16. Der Kragen 19 kann als Kragenzug an dem besagten Beschlagteil angeformt (d.h. einstückig ausgebildet) oder als separate Hülse daran befestigt sein. Im Kragen 19 ist ein Mitnehmer 21 mittels einer Nabe 22 drehbar gelagert. Der Mitnehmer 21 besteht vorzugsweise aus Kunststoff. Die Nabe 22 des Mitnehmers 21 ist zentral mit einer Bohrung 23 zur Aufnahme der Antriebswelle 7 versehen. Das Profil der Bohrung 23 ist passend zum Profil der Antriebswelle 7, vorliegend einem Keilwellenprofil, ausgebildet. Im Anschluss an seine Nabe 22 weist der Mitnehmer 21 eine einstückig mit der Nabe 22 ausgebildete Abdeckscheibe 25 mit größerem Durchmesser als die Nabe 22 auf.

Auf dem Kragen 19 sind zwei Keilsegmente 27 - mit ihren gekrümmten Innenflächen - abgestützt, die - mit ihren gekrümmten Außenflächen - das andere der beiden Beschlagteile 11 und 12, vorliegend das erste Beschlagteil 11, lagern. Hierfür ist eine Aufnahme des letztgenannten Beschlagteils mit einer vorzugsweise drehfest eingepressten Gleitlagerbuchse 28 ausgekleidet, an der die Außenflächen der Keilsegmente 27 anliegen. Die Begriffe "abstützen" und "lagern" sollen nicht auf eine bestimmte Richtung des Kraftflusses durch den Beschlag 10 beschränkt sein, da diese Richtung von der Montage des Beschlags 10 abhängt.

Der Mitnehmer 21 weist - radial beabstandet zur Nabe 22 - ein mit Spiel zwischen die Schmalseiten der Keilsegmente 27 fassendes Mitnehmersegment 29 auf, welches mit der Abdeckscheibe 25 und mit der Nabe 22 einstückig ausgebildet ist. Die Keilsegmente 27, deren Breitseiten einander zugekehrt sind, nehmen, beispielsweise mit je einer Öffnung oder einer durch vorspringende Materialpartien definierten Ausnehmung, jeweils einen abgewinkelten Endfinger 35a einer Omega-förmigen Feder 35 auf Die Feder 35 beaufschlagt die Keilsegmente 27 in Umfangsrichtung, insbesondere um sie auseinander zu drücken, wobei im Betrieb die Breitseiten der Keilsegmente 27 einander berühren und beaufschlagen können.

Der Mitnehmer 21 wird auf der Außenseite des den Kragen 19 aufweisenden Beschlagteils durch einen vorzugsweise aufgeclipsten Sicherungsring 43 axial gesichert. Der Sicherungsrings 43 erstreckt sich in axialer Richtung entlang eines Teiles der Nabe 22, so dass die Nabe 22 nicht direkt an der Innenseite des Kragens 19 anliegt, sondern unter Zwischenlage des Sicherungsrings 43 im Kragen 19 gelagert ist (und dadurch der Mitnehmer 21 am zweiten Beschlagteil 12 gelagert ist). Auf der Außenseite des die Gleitlagerbuchse 28 aufweisenden Beschlagteils (vorliegend des ersten Beschlagteils 11) ist zwischen dessen radial äußerem Rand und der Abdeckscheibe 25 ein Dichtring 44 vorgesehen, beispielsweise aus Gummi oder weichem Kunststoff, der mit der Abdeckscheibe 25 verbunden ist, insbesondere verclipst ist.

Durch die Keilsegmente 27 (und die Feder 35) wird ein Exzenter definiert, welcher in Verlängerung der Richtung der Exzentrizität das Zahnrad 16 an einer Eingriffsstelle in den Zahnkranz 17 drückt. Bei einem Antrieb durch die sich (mehrfach) drehende Antriebswelle 7 wird ein Drehmoment zunächst auf den Mitnehmer 21 und mittels des Mitnehmersegments 29 dann auf den so definierten Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung. Die Neigung der Lehne 4 ist dadurch zwischen mehreren Gebrauchsstellungen stufenlos einstellbar.

Zur Verbesserung des dynamischen Betriebsverhaltens ist vorzugsweise noch als Sperrelement eine Sperrfeder 51 vorgesehen, wie sie beispielsweise in der DE 195 48 809 C1 offenbart ist. Die Sperrfeder 51 wirkt vorliegend mit einer Verzahnung 55 zusammen, die als weiterer Zahnkranz am ersten Beschlagteil 11 ausgebildet ist. Die Sperrfeder 51 sperrt jeweils die Keilsegmente 27 im nicht-angetriebenen Zustand (indem die Sperrfeder 51 mittels Anlage an die Endfinger 35a die Feder 35 sperrt) und wird durch den angetriebenen Mitnehmer 21 gelöst.

Eine abgewandelte Ausbildung des Mitnehmers 21 ist in den motorischen Varianten vorgesehen, wie sie in der US 7,314,250 B1 für einen metallischen, einteiligen Mitnehmer, beispielsweise aus Zink- oder Aluminiumdruckguss, und in der US 2009/0127910 A1 für einen zweiteiligen Mitnehmer aus einem metallischen Ring (vorzugsweise ein Sintermaterial) mit Mitnehmersegment 29 und einem damit drehfest verbundenen Kunststoffbauteil mit Nabe 22 und Abdeckscheibe 25 beschrieben ist. Einen abgewandelten zweiteiligen Mitnehmer zeigt die US 6,619,743 B1, wonach auf dessen Ring die Keilsegmente gelagert sind. Der diesbezügliche Offenbarungsgehalt der drei genannten Druckschriften wird ausdrücklich einbezogen. Der Dichtring 44 am Mitnehmer 21 kann alternativ aus Metall gefertigt werden und mit einem der Beschlagteile 11 oder 12 verbunden werden.

Der Beschlag 10 weist in seinem Inneren einen Bauraum B (zwischen dem ersten Beschlagteil 11 und dem zweiten Beschlagteil 12) auf, welcher an mehreren Stellen nach außen abgedichtet ist, vorliegend beispielsweise mittels des Dichtrings 44 zwischen Mitnehmer 21 und erstem Beschlagteil 11, mittels Fett im Bereich des Getriebes, welches durch das Zahnrad 16 und den Zahnkranz 17 definiert wird, und mittels der Anlage des Sicherungsrings 43 an das zweite Beschlagteil 12. Dadurch ist der Bauraum im Betrieb vor eindringendem Schmutz und bei der Herstellung vor eindringendem Lack weitgehend geschützt.

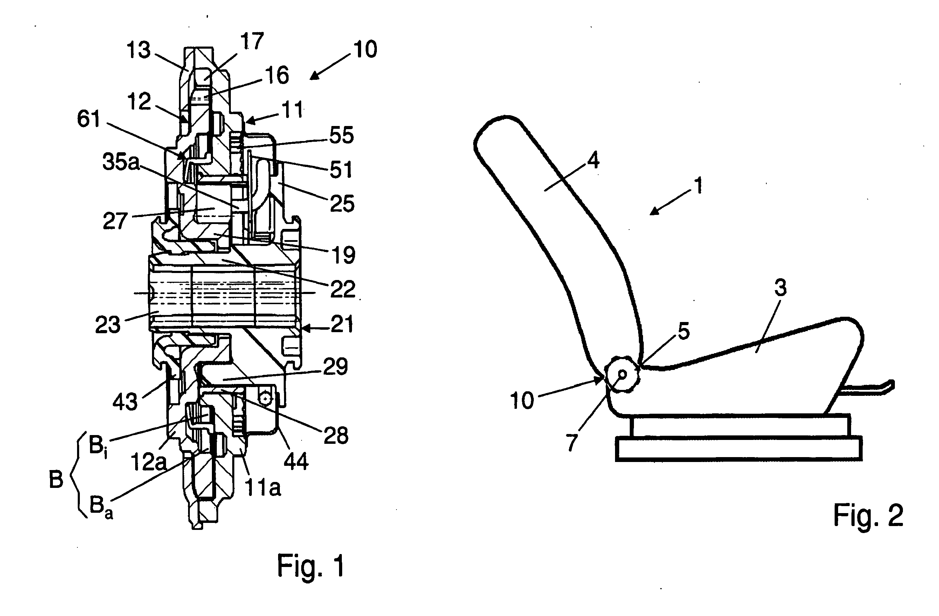

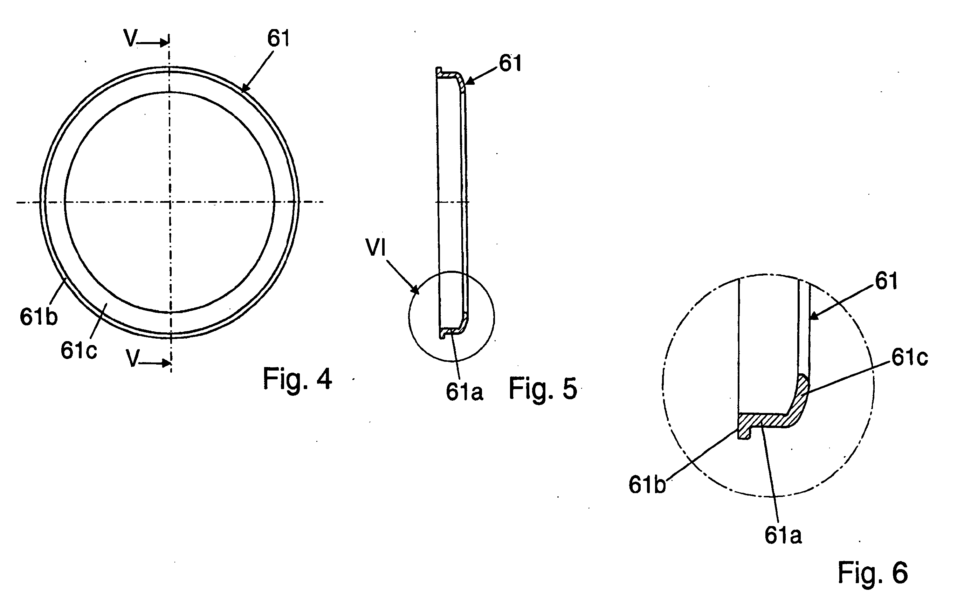

Erfindungsgemäß ist ein Trennring 61 vorgesehen (Fig. 4 bis Fig. 6), welcher den Bauraum B in einen (radial) äußeren Bauraum Bₐ und einen (radial) inneren Bauraum Bᵢ unterteilt (Fig. 1), wobei der äußere Bauraum Bₐ radial weiter außen gelegen ist und bis zu dem Getriebe reicht, und der innere Bauraum Bᵢ radial weiter innen zum Exzenter hin und weiter bis zum Mitnehmer 21 gelegen ist. Der Trennring 61, welcher vorzugsweise einstückig und vorzugsweise aus Kunststoff (z.B. PA 66) ausgebildet ist, weist einen zylindrischen Grundkörper 61a auf, von dem auf einer (axialen) Seite einen Bund 61b radial nach außen absteht und an der anderen (axialen) Seite eine Dichtlippe 61c radial nach innen absteht. Die Dichtlippe 61c ist vorzugsweise relativ zum Grundkörper 61 a in axialer Richtung - wenigstens geringfügig - flexibel, beispielsweise aufgrund der Materialwahl oder eines Filmscharniers oder dergleichen. Vorzugsweise ist das Material des Trennrings 61 bereits elastisch.

Der Trennring 61 liegt einerseits am zweiten Beschlagteil 12 an (vorzugsweise mit der Dichtlippe), und zwar zwischen dem Zahnrad 16 und dem Kragen 19, vorzugsweise auf der (axial) nach innen gewandten Kehrseite eines (axial) nach außen weisenden Sternabsatzes 12a des zweiten Beschlagteils 12, welcher zur Verbindung mit beispielsweise dem Sitzteil 3 vorgesehen ist. Der Trennring 61 liegt andererseits am ersten Beschlagteil 11 an (vorzugsweise mit dem Bund), und zwar radial zwischen dem Zahnkranz 17 und der von der Gleitlagerbuchse 28 ausgekleideten Aufnahme (wobei letztere vorzugsweise durch einen zweiten Kragen definiert wird), vorzugsweise auf der (axial) nach innen gewandten Kehrseite eines (axial) nach außen weisenden Ringabsatzes 11a des ersten Beschlagteils 11, welcher die Verzahnung 55 trägt und zur Verbindung mit beispielsweise der Lehne 4 vorgesehen ist. Die Dichtlippe 61c ermöglicht eine dichtende Anlage des Trennrings 61, gegebenenfalls auch eine Vorspannung, an beide Beschlagteile 11 und 12. Zugleich ist damit auch ein Toleranzausgleich möglich.

Der Trennring 61 sorgt dafür, dass das im inneren Bauraum Bi enthaltene Fett für den Exzenter 27,27 im inneren Bauraum Bi bleibt, also nicht in den äußeren Bauraum Bₐ wegläuft und für die Schmierung des Exzenters verloren geht. Vorzugsweise ist der Bauraum B weiter unterteilt, beispielsweise indem der Mitnehmer 21 mit einem radial vorspringenden Bereich der Nabe 22 der Stirnseite des Kragens 19 anliegt, beispielsweise als Gegenanschlag zur Anlage des Sicherungsrings 43 an das zweite Beschlagteil 12.

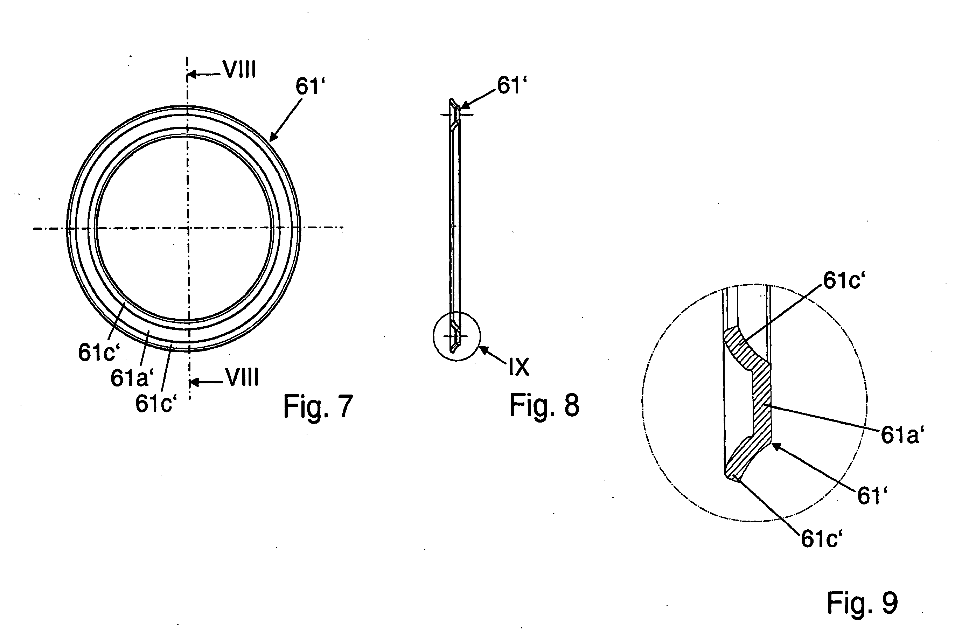

In einer abgewandelten Ausführung (Fig. 7 bis Fig. 9) ist der Trennring 61' vorgesehen, welcher einen ringförmigen Grundkörper 61a' und zwei Dichtlippen 61c' aufweist. Der Grundkörper 61 a' liegt an einem der beiden Beschlagteile 11 oder 12 an, beispielsweise am zweiten Beschlagteil 12, während die beiden Dichtlippen 61 c' am ersten Beschlagteil 11 anliegen. Die Anlage könnte auch genau umgekehrt sein.

Der Trennring 61 kann unabhängig von der genauen Ausbildung des Exzenterumlaufgetriebes verwendet werden. So kann der Trennring 61 den Bauraum B zwischen erstem Beschlagteil 11 und zweitem Beschlagteil 12 auch dann in einen äußeren Bauraum Bₐ (überwiegend ohne Fett) und einen inneren Bauraum Bi (mit Fett) unterteilen, wenn die Lageranordnung für den Exzenter umgedreht ist, d.h. der Kragen 19 am ersten Beschlagteil 11 konzentrisch zum Zahnkranz 17 vorgesehen ist, während die von der Gleitlagerbuchse 28 ausgekleidete Aufnahme am zweiten Beschlagteil 12 konzentrisch zum Zahnrad 16 vorgesehen ist. Ebenso kann der Trennring 61 verwendet werden, wenn das zweite Beschlag 12 das Zahnrad 16 nicht am radial äußeren Rand trägt, sondern - unter Beibehaltung der scheibenförmigen Einheit - noch einen ringförmigen Flanschbereich aufweist, oder wenn - anstelle der scheibenförmigen Einheit - beide Beschlagteile 11 und 12 jeweils in einem Teilbereich in Umfangsrichtung noch radial abstehende Flansche aufweisen, wie beispielsweise in der DE 44 36 101 A1 oder der US 2009/0127910 A1 beschrieben. Die Verwendung der Trennrings 61 ist auch bei den oben genannten motorischen Varianten mit abgewandeltem Mitnehmer 21 möglich.

### Bezugszeichenliste

- 1: Fahrzeugsitz
- 3: Sitzteil
- 4: Lehne
- 5: Handrad
- 7: Antriebswelle
- 10: Beschlag
- 11: erstes Beschlagteil
- 11a: Ringabsatz
- 12: zweites Beschlagteil
- 12a: Stemabsatz
- 13: Umklammerungsring
- 16: Zahnrad
- 17: Zahnkranz
- 19: Kragen
- 21: Mitnehmer
- 22: Nabe
- 23: Bohrung
- 25: Abdeckscheibe
- 27: Keilsegment
- 28: Gleitlagerbuchse
- 29: Mitnehmersegment
- 35: Feder
- 35a: Endfinger
- 43: Sicherungsring
- 44: Dichtring
- 51: Sperrfeder
- 55: Verzahnung
- 61, 61': Trennring
- 61 a, 61a': Grundkörper
- 61b: Bund
- 61c, 61c': Dichtlippe
- B: Bauraum
- Bₐ: äußerer Bauraum
- Bᵢ: innerer Bauraum

## Patentansprüche

1. Beschlag für einen Fahrzeugsitz, insbesondere für einen Kraftfahrzeugsitz, mit einem ersten Beschlagteil (11), an welchem ein Zahnkranz (17) ausgebildet ist, einem zweiten Beschlagteil (12), an welchem ein Zahnrad (16) ausgebildet ist, welches mit dem Zahnkranz (17) kämmt, wodurch die beiden Beschlagteile (11, 12) miteinander in Getriebeverbindung stehen, und einem drehbar gelagerten, von einem Mitnehmer (21) angetriebenen, in Umfangsrichtung umlaufenden Exzenter (27, 27) zum Antrieb einer relativen Abwälzbewegung von Zahnrad (16) und Zahnkranz (17), wobei zwischen dem ersten Beschlagteil (11) und dem zweiten Beschlagteil (12) ein Bauraum (B) vorgesehen ist, welcher wenigstens stellenweise nach außen abgedichtet ist, **dadurch gekennzeichnet, dass** im Bauraum (B) ein Trennring (61; 61') angeordnet ist, der den Bauraum (B) in einen radial äußeren Bauraum (Ba), welcher zu dem durch Zahnrad (16) und Zahnkranz (17) definierten Getriebe hin gelegen ist, und einen radial inneren Bauraum (Bi), welcher zum Exzenter (27, 27) hin gelegen ist und Fett für die Schmierung des Exzenters enthält, unterteilt.

2. Beschlag nach Anspruch 1, **dadurch gekennzeichnet, dass** der Trennring (61; 61') einerseits am ersten Beschlagteil (11) und andererseits am zweiten Beschlagteil (12) anliegt.

3. Beschlag nach Anspruch 2, **dadurch gekennzeichnet, dass** der Trennring (61; 61') einerseits am ersten Beschlagteil (11) und andererseits am zweiten Beschlagteil (12) dichtend anliegt.

4. Beschlag nach Anspruch 2 oder 3, **dadurch gekennzeichnet, dass** der Trennring (61; 61') einerseits am ersten Beschlagteil (11) und andererseits am zweiten Beschlagteil (12) mit Vorspannung anliegt.

5. Beschlag nach einem der vorhergehenden Ansprüche, **dadurch gekennzeichnet, dass** der Trennring (61; 61') einen zylindrischen oder ringförmigen Grundkörper (61 a; 61 a') aufweist, von welchem auf wenigstens einer Seite ein Bund (61b) und/oder eine Dichtlippe (61c; 61c') absteht.

6. Beschlag nach Anspruch 5, **dadurch gekennzeichnet, dass** der Grundkörper (61 a) und/oder der Bund (6 1 b) und/oder die Dichtlippe (61 c; 6 1 c') an einem der beiden Beschlagteile (11, 12) anliegt.

7. Beschlag nach einem der vorhergehenden Ansprüche, **dadurch gekennzeichnet, dass** der Trennring (61; 61') aus Kunststoff und/oder elastisch ausgebildet ist.

8. Beschlag nach einem der vorhergehenden Ansprüche, **dadurch gekennzeichnet, dass** der innere Bauraum (Bi) radial weiter innen als der äußere Bauraum (Ba) gelegen ist.

9. Beschlag nach einem der vorhergehenden Ansprüche, **dadurch gekennzeichnet, dass** ein Umklammerungsring (13) das erste Beschlagteil (11) und das zweite Beschlagteil (12) axial zusammenhält unter Bildung einer scheibenförmigen Einheit, welcher am ersten Beschlagteil (11) befestigt ist und das zweite Beschlagteil (12) radial außen übergreift und insbesondere eine im wesentlichen flache Form aufweist, und/oder dass das erste Beschlagteil (11) den Exzenter (27, 27) aufnimmt, insbesondere mittels einer zum Zahnkranz (17) konzentrischen Gleitlagerbuchse (28), und/oder dass das zweite Beschlagteil (12) den Exzenter (27, 27) abstützt, insbesondere mittels eines zum Zahnrad (16) konzentrischen Kragens (19), und/oder dass der Exzenter (27, 27) zwei Keilsegmente (27) aufweist, und/oder dass eine Feder (35) die Keilsegmente (27) in Umfangsrichtung beaufschlagt.

10. Fahrzeugsitz, insbesondere Kraftfahrzeugsitz, mit wenigstens einem Beschlag nach einem der vorhergehenden Ansprüche, einem Sitzteil (3), welches mit einem der beiden Beschlagteile (11, 12) verbunden ist, und einer Lehne (4), welche mit dem anderen der beiden Beschlagteile (11, 12) verbunden ist.

## Claims

1. Fitting for a vehicle seat, in particular for a motor vehicle seat, with a first fitting part (11) on which a toothed ring (17) is formed, a second fitting part (12) on which a gearwheel (16) is formed, the gearwheel meshing with the toothed ring (17), as a result of which the two fitting parts (11, 12) are in geared connection with each other, and a rotatably mounted eccentric (27, 27) which is driven by a driver (21), revolves in the circumferential direction and is intended for driving a relative rolling movement of gearwheel (16) and toothed ring (17), wherein a construction space (B) which is sealed off to the outside at least in certain places is provided between the first fitting part (11) and the second fitting part (12), **characterized in that** the construction space (B) contains a separating ring (61; 61') which divides the construction space (B) into a radially outer construction space (Ba), which is positioned towards the gearing defined by gearwheel (16) and toothed ring (17), and a radially inner construction space (Bi) which is positioned towards the eccentric (27, 27) and contains grease for lubricating the eccentric.

2. Fitting according to Claim 1, **characterized in that** the separating ring (61; 61') bears on one side against the first fitting part (11) and on the other side against the second fitting part (12).

3. Fitting according to Claim 2, **characterized in that** the separating ring (61; 61') bears in a sealing manner on one side against the first fitting part (11) and on the other side against the second fitting part (12).

4. Fitting according to Claim 2 or 3, **characterized in that** the separating ring (61; 61') bears under prestress on one side against the first fitting part (11) and on the other side against the second fitting part (12).

5. Fitting according to one of the preceding claims, **characterized in that** the separating ring (61; 61') has a cylindrical or annular main body (61a; 61a') from which a shoulder (61b) and/or a sealing lip (61c; 61c') protrudes on at least one side.

6. Fitting according to Claim 5, **characterized in that** the main body (61a) and/or the shoulder (61b) and/or the sealing lip (61c, 61c') bears against one of the two fitting parts (11, 12).

7. Fitting according to one of the preceding claims, **characterized in that** the separating ring (61; 61') is formed from plastic and/or elastically.

8. Fitting according to one of the preceding claims, **characterized in that** the inner construction space (Bᵢ) is positioned further inwards radially than the outer construction space (Bₐ).

9. Fitting according to one of the preceding claims, **characterized in that** a clasp ring (13) holds the first fitting part (11) and the second fitting part (12) together axially, forming a disc-shaped unit, said clasp ring being fastened to the first fitting part (11) and engaging radially on the outside over the second fitting part (12) and, in particular, having a substantially flat shape, and/or **in that** the first fitting part (11) accommodates the eccentric (27, 27), in particular by means of a plain bearing bushing (28) which is concentric with respect to the toothed ring (17), and/or **in that** the second fitting part (12) supports the eccentric (27, 27), in particular by means of a collar (19) which is concentric with respect to the gearwheel (16), and/or **in that** the eccentric (27, 27) has two wedge segments (27), and/or **in that** a spring (35) acts upon the wedge segments (27) in the circumferential direction.

10. Vehicle seat, in particular motor vehicle seat, with at least one fitting according to one of the preceding claims, a seat part (3) which is connected to one of the two fitting parts (11, 12), and a backrest (4) which is connected to the other of the two fitting parts (11, 12).

## Revendications

1. Ferrure pour un siège de véhicule, en particulier pour un siège de véhicule automobile, comprenant une première partie de ferrure (11) sur laquelle est réalisée une couronne dentée (17), une deuxième partie de ferrure (12) sur laquelle est réalisée une roue dentée (16), laquelle s'engrène avec la couronne dentée (17), de telle sorte que les deux parties de ferrure (11, 12) soient en liaison par engrenage l'une avec l'autre, et un excentrique (27, 27) monté à rotation, entraîné par un élément d'entraînement (21) et tournant dans la direction périphérique pour l'entraînement d'un déplacement relatif de roulement de la roue dentée (16) et de la couronne dentée (17), un espace de construction (B) étant prévu entre la première partie de ferrure (11) et la deuxième partie de ferrure (12), lequel est rendu étanche vis-à-vis de l'extérieur au moins en certains emplacements, **caractérisée en ce qu'**une bague de séparation (61 ; 61') est disposée dans l'espace de construction (B), laquelle divise l'espace de construction (B) en un espace de construction radialement extérieur (Ba), qui est placé en direction de l'engrenage défini par la roue dentée (16) et la couronne dentée (17), et un espace de construction radialement intérieur (Bi) qui est placé en direction de l'excentrique (27, 27) et contient de la graisse pour la lubrification de l'excentrique.

2. Ferrure selon la revendication 1, **caractérisée en ce que** la bague de séparation (61 ; 61') s'applique d'un côté contre la première partie de ferrure (11) et de l'autre côté contre la deuxième partie de ferrure (12).

3. Ferrure selon la revendication 2, **caractérisée en ce que** la bague de séparation (61 ; 61') s'applique de manière étanche d'un côté contre la première partie de ferrure (11) et de l'autre côté contre la deuxième partie de ferrure (12).

4. Ferrure selon la revendication 2 ou 3, **caractérisée en ce que** la bague de séparation (61 ; 61') s'applique avec précontrainte d'un côté contre la première partie de ferrure (11) et de l'autre côté contre la deuxième partie de ferrure (12).

5. Ferrure selon l'une quelconque des revendications précédentes, **caractérisée en ce que** la bague de séparation (61 ; 61') comprend un corps de base (61a ; 61a') cylindrique ou annulaire à partir duquel font saillie sur au moins un côté un épaulement (61b) et/ou une lèvre d'étanchéité (61c ; 61c').

6. Ferrure selon la revendication 5, **caractérisée en ce que** le corps de base (61a) et/ou l'épaulement (61b) et/ou la lèvre d'étanchéité (61c ; 61c') s'appliquent contre l'une des deux parties de ferrure (11, 12).

7. Ferrure selon l'une quelconque des revendications précédentes, **caractérisée en ce que** la bague de séparation (61 ; 61') est réalisée en plastique et/ou de manière élastique.

8. Ferrure selon l'une quelconque des revendications précédentes, **caractérisée en ce que** l'espace de construction intérieur (Bi) est placé radialement plus à l'intérieur que l'espace de construction extérieur (Ba).

9. Ferrure selon l'une quelconque des revendications précédentes, **caractérisée en ce qu'**une bague de serrage (13) maintient axialement ensemble la première partie de ferrure (11) et la deuxième partie de ferrure (12) en formant une unité en forme de disque, laquelle est fixée à la première partie de ferrure (11) et vient en prise radialement à l'extérieur sur la deuxième partie de ferrure (12) et présente en particulier une forme essentiellement plate, et/ou **en ce que** la première partie de ferrure (11) reçoit l'excentrique (27, 27), en particulier au moyen d'une douille de palier lisse (28) concentrique à la couronne dentée (17), et/ou **en ce que** la deuxième partie de ferrure (12) supporte l'excentrique (27, 27), en particulier au moyen d'un collet (19) concentrique à la roue dentée (16), et/ou **en ce que** l'excentrique (27, 27) comprend deux segments de coin (27), et/ou **en ce qu'**un ressort (35) sollicite les segments de coin (27) dans la direction périphérique.

10. Siège de véhicule, en particulier siège de véhicule automobile, comprenant au moins une ferrure selon l'une quelconque des revendications précédentes, une partie d'assise (3), laquelle est reliée à l'une des deux parties de ferrure (11, 12), et un dossier (4), lequel est relié à l'autre des deux parties de ferrure (11, 12).
